# EUROPEAN PATENT SPECIFICATION

(11) **EP 0 652 852 B1**
(45) Date of publication and mention of the grant of the patent: **27.11.1996**
(21) Application number: 93917964.4
(22) Date of filing: 30.07.1993
(51) Int. Cl.: C02F 1/78

(54) **WASTE WATER TREATMENT**
BEHANDLUNG VON ABWASSER
TRAITEMENT DES EAUX USEES

(30) Priority: 01.08.1992 GB 9216423
(43) Date of publication of application: 17.05.1995
(73) Proprietor: NUVO ENGINEERING LIMITED, Bedford, Bedfordshire MK41 7PE (GB)
(72) Inventor: NUVO ENGINEERING LIMITED, Bedford, Bedfordshire MK41 7PE (GB)
(74) Representative: Britter, Keith Palmer
(86) International application number: GB9301624
(87) International publication number: WO9403401

(56) References cited:
- WO-A-82/03850
- DE-A- 1 642 387
- DE-A- 2 311 532
- US-A- 4 252 654
- US-A- 4 351 734
- Patent Abstracts of Japan, Vol 14, No 197, C-712, abstract of JP, 02-40289
- (AOSHIMA REITOU KOGYO K.K.),

## Description

This invention relates to a method of and apparatus for treating waste water to clean , purify and re-oxygenate it.

The efficient and economic cleaning, purification and re-oxygenation of waste water, particularly when such waste water is derived from agricultural or industrial processes, is of major importance to the populace and to the environment.

For example, much of the water used in agriculture and in industry for the purpose of cleaning and processing food products, becomes contaminated with a wide range of organic and inorganic material during the process route. Most, if not all, of this contaminated water, is then discharged to public waterways and land drainage systems where it can then become a major source of contamination, thereby contaminating existing water supplies in certain circumstances.

The cleaning, purification and re-oxygenation of such waste water by on-site small scale processing plant, prior to its being discharged to public waterways and drainage systems, substantially reduces the risk of contaminating public water supplies and reduces substantially the cost of processing water for public consumption.

Also, in countries where there are little or no public water processing plants, the use of a small scale processing plant would reduce substantially the risk and incidence of water borne diseases, there again, being of substantial benefit to the populace and to the environment.

Hitherto, contaminated waste water was, generally, not treated prior to its discharge to the public foul water sewer. However, that which is treated, is processed partially for the removal of certain known contaminating compounds only and it is not generally purified or re-oxygenated before final discharge and, therefore, remains as a potential source of contamination for the public water supply.

In one prior art approach to treating liquid waste as disclosed in US Patent 4,351,734 (KAUFFMAN), the liquid is passed through a reaction zone containing a bed of electrically conductive particles, such as carbon or graphite, in which arcing occurs during the passage of pulsed airflow in contact with the liquid. This arcing leads to the production of ozone in the bed, the ozone acting to purify the liquid waste. The carbon or graphite particles act purely to conduct electricity and thereby create arcing during their intermittent contacts with porous electrodes.

A primary object of this invention is to provide on-site, low cost waste water treatment plant which can process economically a wide range of waste water quantities to remove a wide range of contaminates, whilst also purifying and re-oxygenating the remaining water, ready for re-use or discharge to the public water supply.

According to one aspect of the invention, there is provided a method of treating waste water, comprising passing waste water to be treated along a tortuous path whilst passing a mixture of ozone and oxygen therethrough, characterised in that the tortuous path comprises carbon or a carbonaceous material which acts as a catalyst in the oxidation of organic compounds in the waste water.

According to another aspect of the invention, there is provided apparatus for treating waste water, comprising a tortuous path along which waste water to be treated is arranged to be passed and means arranged to pass a mixture of ozone and oxygen through the water passing along the tortuous path, characterised in that the tortuous path comprises carbon or a carbonaceous material as a catalyst in the oxidation of organic compounds in the waste water.

Application of the inventive method and apparatus defined above removes organic compounds, usually suspended but possibly also dissolved, from, say, the resultant liquid and/or gas phases by oxidation and preferably oxygenates, thereby purifying, the so-treated water.

The waste water to be treated by the inventive method and apparatus may be passed through filter means to remove therefrom coarse organic and/or inorganic particulate material suspended therein, prior to its being passed along the tortuous path where it has passed through it the mixture of ozone and oxygen in intimate contact therewith.

The ozone and oxygen mixture is preferably an intimate one in the form of fine bubbles which may have a high concentration of ozone, and which may be bubbled through the water passing or being passed along the tortuous path. The oxygen may be provided from air.

In the preferred embodiment of inventive apparatus to be described hereinbelow, the waste water, which has been filtered previously, is passed along a tortuous path provided in a combined ozone/air reactor unit where suspended and/or dissolved organic compounds in the gas and liquid phases are removed by oxidation and where the remaining water is purified and oxygenated. After such treatment, the purified and re-oxygenated water can be fed to a clean water storage vessel or other container, for subsequent re-use or disposal.

The combined ozone/air reactor unit is preferably a unitary structure which can be transported from one location to another, as will be described in more detail hereinbelow.

The tortuous paths through which the waste water to be treated is passed may be provided by a mass or matrix of inert material, preferably in granular or particulate form, such as, stones, sand, ceramic, stainless steel balls or any combination thereof, which may be layered between alternate layers of the carbon or carbonaceous material, such as coke, for example, that derived from the anaerobic pyrolysis and partial gasification of coal. Other such materials may also include activated carbon, again, preferably in granular or particulate form.

In accordance with the present invention, the carbon or carbonaceous material, optionally layered alternately with the mass or matrix of inert material, acts as a catalyst to increase the oxidation rate of organic compounds in the gas and liquid phases, as well as in the micro-solid phase, whereby the reaction rate between the ozone and those organic compounds is enhanced by an order of magnitude of approximately three. Thus, the quantity of ozone used normally in this type of process can be reduced substantially by, say, approximately 80%.

Indeed, it is considered that there are three main aspects of the treatment of the waste water in the inventive method and apparatus, namely:
(1) the physical entrapment of larger organic molecules on the surface of the carbon or carbonaceous material, such as the granular activated carbon or coke of the preferred embodiment;
(2) the chemical reaction between the organic material in the waste water and the carbon or carbonaceous material on the surface thereof; and
(3) a straightforward oxidation reaction between the organic material and the ozone which, inter alia, can take place at the surface of the carbon or other carbonaceous material which acts effectively as an oxidation catalyst.

As a result, the high oxidising capability of ozone ensures that substantially all water- or gas- or air-borne bacteria likely to be harmful to end users is removed.

A preferred embodiment of inventive apparatus for putting into effect the inventive method of treating waste water, will now be described by way of example and with reference to the accompanying drawings in which:
Figure 1 is a diagrammatic flow diagram of apparatus for treating waste water;
Figure 2A is a side elevation of a combined ozone/air reactor unit used in the apparatus shown in Figure 1; and
Figure 2B is a plan view of the reactor unit shown in Figure 2A.

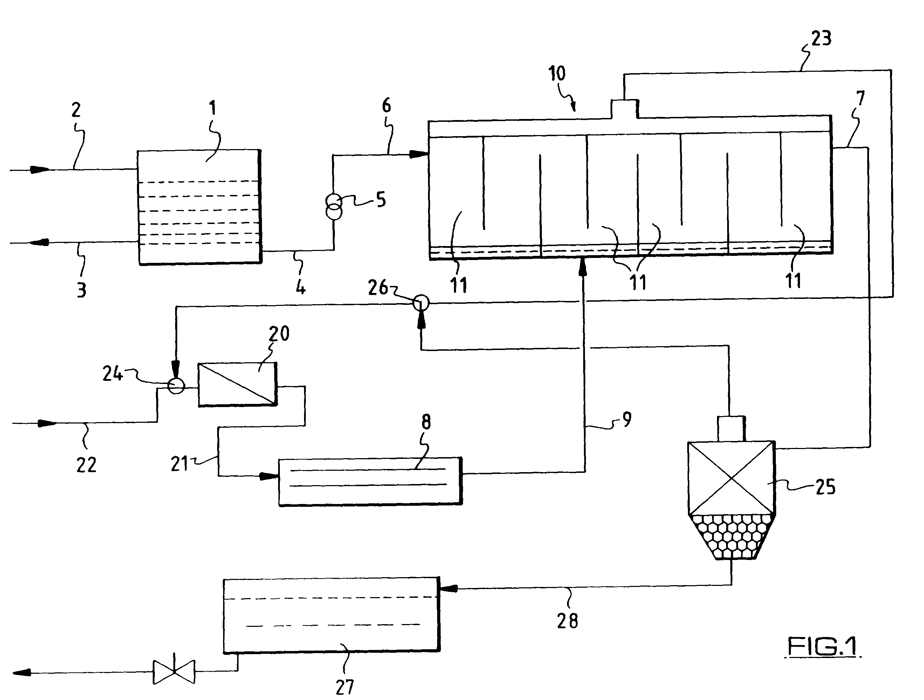

Referring firstly to Figure 1, apparatus for treating waste water comprises a filter 1 for removing generally solid material, such as, coarse organic and inorganic particulate material, suspended in waste water entering the filter 1 and the upper region thereof via an inlet 2. An outlet 3 for the removal of such solid material from the filter 1 is provided at the lower region thereof. The filter 1 may be of any suitable form, such as, graded filter meshes.

The so-filtered waste water is then fed from the filter 1 via an outlet 4, also at the lower region thereof, to the inlet 6 of a reactor unit, indicated generally at 10, by means of a pump 5.

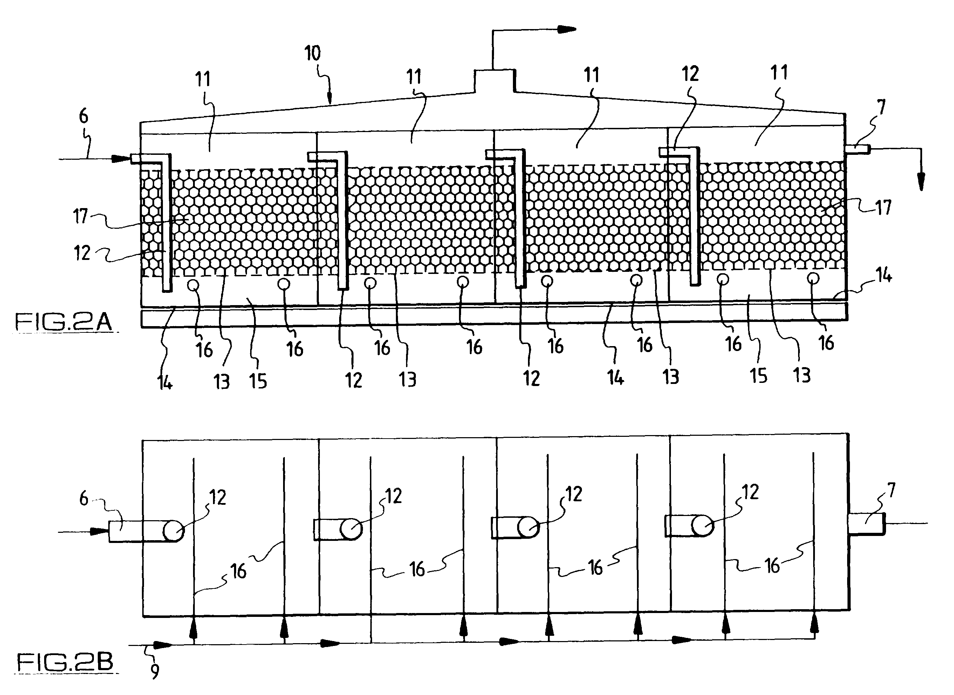

The reactor unit 10 comprises a series, in this case four, of tank sections 11, as shown also in Figure 2, which are close coupled by means of respective transfer ducts 12. This arrangement provides a continuous feed path for the waste water being treated from the inlet 6 of the unit 10 to its outlet 7.

Each tank section 11 of the reactor unit 10 is fitted with a false, perforated floor 13 located above a solid floor 14 to provide a gap 15 therebetween. In this gap 15 are located one or more injectors 16 in the form of perforated tubular sections, which perforations are in the form of discrete holes or a porous or mesh-like material. Supported by the false, perforated floor 13 is a matrix 17 of granular material, in this case, alternate layers (not shown) of an inert particulate material, such as, sand, stones or ceramic, and granular activated carbon or coke, for example, that derived from the anaerobic pyrolysis and partial gasification of coal, which provides tortuous paths for waste water passing therethrough.

The injectors 16 are fed with a mixture of ozone and oxygen, in the form of air, from an ozone generator 8 via piping 9 which, in turn, is fed with compressed air from an air compressor and drier unit 20 through piping 21. Valves may be employed to control the flow of ozone and air, depending upon operating conditions. An intake 22 for ambient air supplies the unit 20 with air for compression and drying by the unit and subsequent delivery to the ozone generator 8.

An ozone recycling line 23 is connected between the reactor unit 10 and compressor/drier unit 20 via a valve 24, whilst the outlet 7 of the unit 10 is connected to an ozone removal device 25, excess ozone removed from the treated water being recycled to the unit 20 via a further valve 26 and the inlet valve 24 of the unit 20. Treated, clean water is fed from the ozone removal device 25 to a clean water discharge or recycle tank 27 via piping 28.

In use of the inventive apparatus, waste water to be treated is fed to the filter 1 via its inlet 2, where coarse organic and inorganic particulate material is filtered from the water. The so-filtered water is then pumped to the inlet 6 of the reactor unit 10 where it is delivered by the feed pipe 12 to the lower region of the first tank section 11 in the gap 15 between the false and solid floors, 13, 14.

A pressurised mixture of ozone and air, with a high concentration of ozone therein, is fed from the ozone generator 8 to the injectors 16 located in the gap 15 beneath the false floor 13 supporting the layered matrix 17 of granular material in each tank section 11, providing the tortuous paths for the filtered, waste water being treated in the reactor unit 10.

The perforated tubular injectors 16, the perforated false floor 13 and the pressurised ozone/air mixture generate a high volume of bubbles distributed evenly throughout each tank section for intimate mixing with the waste water penetrating upwardly along the tortuous paths defined by the layers of particulate inert and carbonaceous materials of the matrices 17.

Such intimate mixing ensures that oxidation reactions occur between the bubbles of ozone/air mixture and the contaminants in the waste water to oxidise substantially all the organic substances suspended or otherwise contained in the water. As the water passes upwardly through each successive layer of the matrix 17, in this particular case, alternate layers of sand, stones or ceramic and granular coke or an activated carbon, it tends to lose any coloration resulting from contaminants contained therein. Also, the coke or activated carbon reduces some of the ozone to oxygen which serves to oxygenate the water further. The strong oxidising capability of the ozone also ensures that any harmful water- or air-borne bacteria are substantially removed.

Indeed, and as described above, it is considered that there are three main aspects of the treatment of the waste water in the inventive method and apparatus, namely:
(1) the physical entrapment of larger organic molecules on the surface of the carbon or carbonaceous material, such as, the granular activated carbon or coke of the preferred embodiment;
(2) the chemical reaction between the organic material in the waste water and the carbon or carbonaceous material on the surface thereof; and
(3) a straightforward oxidation reaction between the organic material and the ozone which, inter alia, can take place at the surface of the carbon or other carbonaceous material which acts effectively as an oxidation catalyst.

With the water level in the first tank section 11 of the reactor unit 10 exceeding that of the upper surface of the matrix 17, the water enters the transfer duct 12 extending downwardly into the second tank section of the reactor unit, where treatment of the waste water continues. This treatment is repeated in the next two successive tank sections 11 until the treated water passes from the unit 10, via the outlet 7, to the ozone removal device 25 which ensures that no ozone escapes to the atmosphere. Any suitable liquid/gas separation unit (not shown) may be used for that device.

Excess ozone and air from the reactor unit 10 is recycled, via line 23 and valves, 26, 24, back to the compressor/drier unit 20, whilst the clean water from which ozone has been removed at device 25, is passed to the discharge or recycle tank 27 via piping 28.The apparatus in accordance with the invention can be used to treat a given quantity of contaminated waste water. Also, its components can be made of materials, such as, stainless steel and/or plastics material, which are inert to the action of ozone, such that they do not become oxidised thereby.Further, the apparatus can be constructed as a unitary structure such that it can be transported readily from one location to another, wherever contaminated waste water requires purification. It may also be mounted on wheels or on skids or it could be vehicle-mounted. Alternatively, it could be installed as a fixed structure above or at least partially below ground level. Provision for an electrical generator may also be made. Also, although air is preferred in supplying the oxygen mixed with the ozone, a pure oxygen supply may be provided.T h e apparatus may be constructed to deal with any practical throughput of waste water to be treated, namely, from 1m³/hour to 100,000m³/hour or even larger if necessary. It also provides a treatment system for purifying contaminated waste water which is more economical than those known previously.

Further, the inventive apparatus has been found to be at least 50% more efficient than other, known systems for water purification.

## Claims

1. A method of treating waste water comprising passing waste water to be treated along a tortuous path (17) whilst passing a mixture of ozone and oxygen therethrough, characterised in that the tortuous path (17) comprises carbon or a carbonaceous material which acts as a catalyst in the oxidation of organic compounds in the waste water.

2. A method according to claim 1, wherein the waste water to be treated is passed through filter means (1) to remove therefrom coarse organic and/or inorganic particulate material suspended therein, prior to its being passed along the tortuous path (17).

3. A method according to claim 1 or 2, wherein the mixture of ozone and oxygen is an intimate one in the form of fine bubbles.

4. A method according to any preceding claim, wherein the ozone and oxygen mixture is bubbled through the water passing or being passed along the tortuous path (17).

5. A method according to any preceding claim, wherein the oxygen is provided in the form of air.

6. A method according to any preceding claim, wherein the tortuous path (17) through which the waste water to be treated is passed comprises a mass or matrix of inert material.

7. A method according to claim 6, wherein the inert material is layered alternately with layers of the carbon or carbonaceous material.

8. A method according to claim 6 or 7, wherein the inert material is in granular or particulate form.

9. A method according to claim 6, 7, or 8, wherein the inert material is ceramic, stainless steel, sand, stones or any combination thereof.

10. A method according to any preceding claim, wherein the carbon or carbonaceous material is in granular or particulate form.

11. A method according to any preceding claim, wherein the carbon or carbonaceous material is coke or activated carbon.

12. Apparatus for treating waste water, comprising a tortuous path (17) along which waste water to be treated can be passed, and means arranged to pass a mixture of ozone and oxygen through the water passing or being passed along the tortuous path, characterised in that the tortuous path (17) comprises carbon or a carbonaceous material as a catalyst in the oxidation of organic compounds in the waste water.

13. Apparatus according to claim 12 including filter means (1) through which waste water to be treated can be passed to remove therefrom coarse organic and/or inorganic particulate material suspended therein, prior to its being passed along the tortuous path (17).

14. Apparatus according to claim 12 or 13, including means (8) arranged to form the mixture of ozone and oxygen as an intimate one in the form of fine bubbles.

15. Apparatus according to any of claims 12 to 14 including means (16) arranged to bubble the ozone and oxygen mixture through the water passing or being passed along the tortuous path.

16. Apparatus according to any of claims 12 to 15 including means (20) arranged to supply the oxygen in the form of air.

17. Apparatus according to any of claims 12 to 16, wherein the tortuous path (17) through which the waste water to be treated is passed comprises a mass or matrix of inert material.

18. Apparatus according to claim 17, wherein the inert material is layered alternatively with layers of the carbon or carbonaceous material.

19. Apparatus according to claim 17 or 18, wherein the inert material is in granular or particulate form.

20. Apparatus according to claim 17, 18 or 19, wherein the inert material is ceramic, stainless steel, sand, stones or any combination thereof.

21. Apparatus according to any of claims 12 to 20, wherein the carbon or carbonaceous material is in granular or particulate form.

22. Apparatus according to any of claims 12 to 21, wherein the carbon or carbonaceous material is coke or activated carbon.

23. Apparatus according to any of claims 12 to 22 in the form of a combined ozone/air reactor unit (10).

24. Apparatus according to claim 23 in the form of a unitary structure which is transportable.

25. Apparatus according to any of claims 12 to 24, which can be installed as a fixed structure, above or at least partially below ground level.

## Patentansprüche

1. Eine Methode der Abwasseraufbereitung, bei der fließendes Abwasser entlang einer gewundenen Strecke (17) durch die Zugabe einer Ozon- und Sauerstoffmischung behandelt wird, und welche dadurch charakterisiert ist, daß die gewundene Strecke (17) aus Kohlenstoff bzw, einem kohlenstoffhaltigen Material besteht, das als Katalysator bei der Oxidation der organischen Verbindungen im Abwasser wirkt.

2. Eine Methode gemäß Anspruch 1, bei der das zu behandelnde Abwasser durch Filteranlagen (1) geleitet wird, um die in ihm enthaltenen groben organischen bzw. anorganischen Teilchen zu beseitigen, bevor es durch die gewundene Strecke (17) geleitet wird.

3. Eine Methode gemäß Anspruch 1 oder 2, bei der die Ozon- und Sauerstoffmischung eine innige Mischung in Bläschenform ist.

4. Eine Methode gemäß allen vorhergehenden Ansprüchen, bei der die Ozon- und Sauerstoffmischung durch das entlanger der gewundenen Strecke fließende Wasser geblasen wird.

5. Eine Methode gemäß allen vorhergehenden Ansprüchen, bei der der Sauerstoff in Form von Luft bereitgestellt wird.

6. Eine Methode gemäß allen vorhergehenden Ansprüchen, bei der die gewundene Strecke (17), durch die das zu behandelnde Abwasser strömt, eine Masse bzw. eine Grundmasse inerten Materials umfaßt.

7. Eine Methode gemäß Anspruch 6, bei der das inerte Material abwechselnd mit Schichten des Kohlenstoffs bzw. des kohlenstoffhaltigen Materials geschichtet ist.

8. Eine Methode gemäß Anspruch 6 oder 7, bei der das inerte Material in Körnchen- bzw. Teilchenform vorliegt.

9. Eine Methode gemäß Anspruch 6, 7 oder 8, bei der das inerte Material ein keramisches Material, Edelstahl, Sand, Stein oder eine Kombination davon ist.

10. Eine Methode gemäß allen vorhergehenden Ansprüchen, bei der der Kohlenstoff bzw. das kohlenstoffhaltige Material in Körnchen- bzw. Teilchenform vorliegt.

11. Eine Methode gemäß allen vorhergehenden Ansprüchen, bei der der Kohlenstoff bzw. das kohlenstoffhaltige Material Koks oder Aktivkohle ist.

12. Eine Vorrichtung zur Wasseraufbereitung, bestehend aus einer gewundenen Strecke (17), durch die das zu behandelnde Abwasser geleitet werden kann, und einer Einrichtung zur Einführung von Ozon und Sauerstoff in das entlang der gewundenen Strecke fließende Wasser, welche dadurch charakterisiert ist, daß die gewundene Strecke (17) aus Kohlenstoff bzw. einem kohlenstoffhaltigen Material besteht, das als Katalysator bei der Oxidation der organischen Verbindungen im Abwasser wirkt.

13. Eine Vorrichtung gemäß Anspruch 12 einschließlich Filteranlagen (1), durch die das zu behandelnde Abwasser geleitet werden kann, um die in ihm enthaltenen groben organischen bzw. anorganischen Teilchen zu beseitigen, bevor es durch die gewundene Strecke (17) geleitet wird.

14. Eine Vorrichtung gemäß den Ansprüchen 12 und 13, einschließlich Geräte zur Bildung der Ozon- und Sauerstoffmischung als innige Mischung in Bläschenform.

15. Eine Vorrichtung gemäß den Ansprüchen 12 bis 14, einschließlich Geräte (16) zum Blasen der Ozon- und Sauerstoffmischung durch das entlang der gewundenen Strecke fließende Wasser.

16. Eine Vorrichtung gemäß den Ansprüchen 12 bis 15, einschließlich Geräte (20) zur Zufuhr von Sauerstoff in Form von Luft.

17. Eine Vorrichtung gemäß den Ansprüchen 12 bis 16, bei der die gewundene Strecke (17) durch die das zu behandelnde Abwasser strömt, eine Masse bzw. eine Grundmasse inerten Material umfaßt.

18. Eine Vorrichtung gemäß Anspruch 17, bei dem das inerte Material abwechselnd mit Schichten des Kohlenstoffs bzw. des kohlenstoffhaltigen Material geschichtet ist.

19. Eine Vorrichtung gemäß Anpruch 17 oder 18, bei der das inerte Material in Körnchen- bzw. Teilchenform voliegt.

20. Eine Vorrichtung gemäß Anspruch 17, 18 oder 19, bei der das inerte Material ein keramisches Material, Edelstahl, Sand, Stein oder eine Kombination davon ist.

21. Eine Vorrichtung gemäß den Ansprüchen 12 bis 20, bei der der Kohlenstoff bzw. das kohlenstoffhaltige Material in Körnchen- bzw. Teilchenform vorliegt.

22. Eine Vorrichtung gemäß den Ansprüchen 12 bis 21, bei der der Kohlenstoff bzw. das kohlenstoffhaltige Material Koks oder Aktivkohle ist.

23. Eine Vorrichtung gemäß den Ansprüchen 12 bis 22 in Form einer kombinierten Ozon-/ Luftreaktoreinheit.

24. Eine Vorrichtung gemäß Anspruch 23 in Form einer unitären Struktur, die transportierbar ist.

25. Eine Vorrichtung gemäß den Ansprüchen 12 bis 24, die als eine feststehende Struktur über oder zumindest teilweise über dem Erdnivau installiert werden kann.

## Revendications

1. Une méthode de traitement des eaux usées comprenant à faire passer l'eau usée à traiter le long d'une sinuosité (17) traversée par un mélange d'ozone et d'oxygène, caractérisée en ce que la sinuosité (17) est constituée de carbone ou de matière carbonée jouant le rôle de catalyseur dans la réaction d'oxydation des composés organiques présents dans l'eau esée.

2. Une méthode selon la revendication 1, dans laquelle l'eau usée à traiter passe par un dispositif filtrant (1) chargé de retenir les grosses particules organiques et/ou inorganiques en suspension, avant de circuler dans la sinuosité (17).

3. Une méthode selon la revendication 1 ou 2, dans laquelle le mélange d'ozone et d'oxygène est un mélange intime se présentant la forme de fines bulles.

4. Une méthode selon une revendication précédente quelconque, dans laquelle on fait barboter le mélange d'ozone et d'oxygène dans l'eau circulant ou amenée dans la sinuosité (17).

5. Une méthode selon une revendication précédente quelconque, dans laquelle l'oxygène est fourni sous forme d'air.

6. Une méthode selon une revendication précédente quelconque, dans laquelle la sinuosité (17) dans laquelle circule l'eau usée à traiter est constituée d'une masse ou matrice de matière inerte.

7. Une méthode selon la revendication 6, dans laquelle la matière inerte est disposée en couches alternant avec des couches de carbone ou de matière carbonée.

8. Une méthode selon la revendication 6 ou 7, dans laquelle la matière inerte se présente sous forme granulaire ou particulaire.

9. Une méthose selon la revendication 6, 7 ou 8, dans laquelle la matière inerte est en céramique, en acier inoxydable, en sable, en pierres ou faite d'une combinaison quelconque de ces éléments.

10. Une méthode selon une revendication précédente quelconque, dans laquelle le carbone ou la matière carbonée se présente sous forme granulaire ou particulaire.

11. Une méthode selon une revendication précédente quelconque, dans laquelle le carbone ou la matière carbonée est du coke ou du charbon actif.

12. Appareil destiné à traiter de l'eau usée, comprenant une sinuosité (17) le long de laquelle peut circuler l'eau usée à traiter, et les moyens mis en oeuvre pour faire passer un mélange d'ozone et d'oxygène dans l'eau circulant le long de la sinuosité, caractérisé en ce que la sinuosité (17) est constituée de carbone ou de matière carbonée jouant le rôle de catalyseur dans la réaction d'oxydation des composés organiques présents dans l'eau usée.

13. Appareil selon la revendication 12 incluant un dispositif filtrant (1) que l'eau usée à traiter peut traverser, et chargé de retenir les grosses particules organiques et/ou inorganiques en suspension, avant l'acheminenent de l'eau dans la sinusité (17).

14. Appareil selon la revendication 12 ou 13 incluant un dispositif (8) mis en oeuvre pour que le mélange d'ozone et d'oxygène soit un mélange intime se présentant sous la forme de fines bulles.

15. Appareil selon les revendications 12 à 14, incluant un dispositif (16) mis en oeuvre pour faire barboter le mélange d'ozone et d'oxygène dans l'eau circulant ou amenée dans la sinuosité.

16. Appareil selon les revendications 12 à 15 incluant un dispositif (20) mis en oeuvre pour fournir l'oxygène sous forme d'air.

17. Appareil selon les revendications 12 à 16, dans lequel la sinuosité (17) dans laquelle circule l'eau usée à traiter est constituée d'une masse ou matrice de matière inerte.

18. Appareil selon la revendication 17, dans lequel la matière inerte est disposée en couches alternant avec des couches de carbone ou de matière carbonée.

19. Appareil selon la revendication 17 ou 18, dans lequel la matière inerte se présente sous forme granulaire ou particulaire.

20. Appareil selon la revendication 17, 18 ou 19, dans lequel la matière inerte est en céramique, en acier inoxydable, en sable, en pierres ou faite d'une combinaison quelconque de ces eléments.

21. Appareil selon les revendications 12 à 20, dans lequel le carbone ou la matière carbonée se présente sous forme granulaire ou particulaire.

22. Appareil selon les revendications 12 à 21, dans lequel le carbone ou le matériau carboné est du coke ou du charbon actif.

23. Appareil selon les revendications 12 à 22 se présentant sous la forme d'un réacteur mixte ozone/air (10).

24. Appareil selon la revendication 23 se présentant sous la forme d'une structure unitaire transportable.

25. Appareil selon les revendications 12 à 24, pouvant se monter en une structure fixe, au-dessus ou au moins partiellement au-dessous du niveau du sol.
